# EUROPÄISCHE PATENTSCHRIFT

(11) **EP 0 887 660 B1**
(45) Veröffentlichungstag und Bekanntmachung des Hinweises auf die Patenterteilung: **09.06.2010**
(21) Anmeldenummer: 98105831.6
(22) Anmeldetag: 31.03.1998
(51) Int. Cl.: G01S 17/89, A01D 41/12

(54) **Vorrichtung an Landmaschinen zur berührungslosen Abtastung von sich über den Boden erstreckenden Konturen und dazu gehörende Verfahren**
Device mounted on agricultural machines for contactless mapping of ground surface contours and accompanying method
Dispositif pour montage sur engins agricoles pour le balayage sans contact de contours sur la surface de la terre et un method qu'y correspond

(30) Priorität: 25.06.1997 DE 19726917
(43) Veröffentlichungstag der Anmeldung: 30.12.1998
(60) Teilanmeldung: 05025026.5
(73) Patentinhaber: CLAAS Selbstfahrende Erntemaschinen GmbH, 33428 Harsewinkel (DE)
(72) Erfinder: Diekhans, Norbert Dr., 33335 Gütersloh (DE); Huster, Jochen, 33330 Gütersloh (DE)

(56) Entgegenhaltungen:
- EP-A- 0 732 045
- DE-A- 4 318 798
- US-A- 4 299 483
- US-A- 5 612 883
- LUTZ HOFMANN: "Schwadabtatung mit Ultraschall" LANDTECHNIK, Bd. 5-93, Seiten 266-268,

## Beschreibung

Die Erfindung bezieht sich auf eine Vorrichtung an Landmaschinen zur berührungslosen Abtastung von sich über dem Boden erstreckenden Konturen.

Eine derartige Vorrichtung ist aus dem Aufsatz "Schwadabtastung mit Ultraschall" (Zeitschrift: Landtechnik 5-93, Seite 266-268) bekannt. Die dort beschriebene Vorrichtung besteht aus mehreren auf einer Befestigungsleiste im Abstand von 40 cm zueinander angeordneten Ultraschallsensoren, die senkrecht auf den Boden gerichtet sind. Diese Befestigungsleiste wird zum Beispiel an einem Feldhäcksler oder an einem eine Ballenpresse ziehenden Traktor montiert. Mit Hilfe der Ultraschallsensoren kann die Höhe beispielsweise eines Stroh- oder Grünfutterschwades über dem Boden an bestimmten Punkten ermittelt werden, wodurch die Kontur des Schwades über dem Boden entlang einer horizontalen Linie abgetastet wird. Die dort beschriebene Vorrichtung hat jedoch einige Nachteile.

Die bekannte Abtastvorrichtung ist relativ teuer, da für die Abtastung mehrere Ultraschallsensoren notwendig sind.

Darüber hinaus besteht ein wesentlicher Nachteil darin, daß der Abstand der Ultraschallsensoren zueinander auf der Befestigungsleiste einen Mindestabstand nicht unterschreiten darf, da es ansonsten zu einer störenden, gegenseitigen Beeinflussung der Ultraschallsensoren aufgrund der unzureichenden Fokussierung der Schallkeulen kommt. Dies beschränkt jedoch die horizontale Auflösung (Dichte der Meßpunkte) der Konturabtastung. Darüber hinaus darf auch der Abstand der Ultraschallsensoren über dem Boden bzw. über der abzutastenden Kontur nicht zu groß werden (nicht größer als ca. 1,2 m), da es wegen der relativ großen Divergenz der Schallkeulen ebenfalls zu einer störenden, gegenseitigen Beeinflussung der Ultraschallsensoren kommt.

Eine derart niedrige Anbringungshöhe an der Landmaschine ist oftmals schon aus konstruktiven Gründen nur schwierig zu realisieren. Außerdem wird eine derart sperrige und in niedriger Höhe angebrachte Befestigungsleiste mit mehreren Ultraschallsensoren im Feldeinsatz sehr leicht beschädigt. Die Anbringungshöhe der Befestigungsleiste zu vergrößern ist jedoch nur möglich, wenn der Abstand der Ultraschallsensoren zueinander auf der Befestigungsleiste ebenfalls vergrößert wird, was wiederum eine geringere horizontale Auflösung (Quer zur Fahrtrichtung) der Schwad-Konturabtastung bedeutet.

Der Versuch den Mindestabstand der Ultraschallsensoren zueinander dadurch zu verringern, daß diese nicht gleichzeitig arbeiten, sondern benachbarte Sensoren abwechselnd messen, erfordert eine aufwendige Ansteuerschaltung für die einzelnen Ultraschallsensoren.

Für eine vorausschauende Konturabtastung wie sie beispielsweise für eine automatische Lenkung entlang der abgetasteten Schwadkontur notwendig wäre, müßte die Befestigungsleiste mit den Ultraschallsensoren in aufwendiger und umständlicher Weise an ein frontseitig an der Landmaschine angeordnetes und nach vom verlängertes zusätzliches Haltegestänge montiert werden.

Ein weiterer Nachteil der bekannten Abtastvorrichtung besteht darin, daß die Genauigkeit und Zuverlässigkeit der Erntegut-Abtastung mittels Ultraschall stark von der Art und Beschaffenheit des Erntegutes und von Witterungsbedingungen abhängt.

Es sind ferner aus der US 5,612,883 eine Vorrichtung und Verfahren bekannt, die eine sichere und genaue Führung von mobilen unbemannten Landfahrzeugen auf einem Arbeitsfeld ermöglichen. Zur Erhöhung der Fahrsicherheit und Vermeidung Unfällen ist auf dem Landfahrzeug eine Einrichtung zur Erkennung von Hindernissen auf dem Fahrweg angebracht. Hierfür ist auf der Fahrerkabine des Landfahrzeugs eine berührungslos arbeitende Detektionseinrichtung angebracht, die mittels eines bewegten Laserstrahl innerhalb einer Schwenkebenen einen Fahrweg vorrausschauend abtastet. Die Entfernung zu einzelnen Abtastpunkten wird aufgezeichnet und dann auf Hindernisse untersucht. Die Lage eines eventuell vorhandenen Hindernisse wird dann der übergeordneten Positions- und Navigationseinrichtung mitgeteilt und von dieser eine Umfahrung des Hindernisses veranlasst. Diese Detektionseinrichtung ist lediglich eine Untersystem des offenbarten Positions- und Navigationssystems und ist nicht befähigt, vorausschauend einer bemannten Landmaschine Informationen über das zu erntende Erntegut zur Verfügung zu stellen.

In der EP 0 732 045 A1 wird eine Reflex-Ortungsvorrichtung offenbart. Eine oberhalb und insbesondere senkrecht über einer Gutkante angeordnete Ortungsvorrichtung erfasst mit einem berührungslos arbeitenden Ortungssignal zu beiden Seiten der Getreidekante hin, die relative Lage der Getreidekante zur Ortungsvorrichtung. Dieses Ortungssignal wird dann einer Regelvorrichtung zur automatischen Lenkung der Landmaschine entlang der Getreidekante zugeführt. Die offenbarte Ortungsvorrichtung ist in ihrer Anordnung an der Landmaschine sowie in der Verwendung des Ortungssignals lediglich auf die Erkennung einer Getreidekante beschränkt.

Aufgabe der Erfindung ist es eine Vorrichtung an Landmaschinen zur berührungslosen Abtastung von sich über dem Boden erstreckenden Konturen zu schaffen, die die Nachteile der vorstehend beschriebenen Vorrichtungen beseitigt

Diese Aufgabe wird erfindungsgemäß durch die Merkmale des Patentanspruches 1 gelöst.

Erfindungsgemäß wird zur berührungslosen Abtastung von sich über dem Boden erstreckenden Konturen eine an sich bekannte Laser-Entfernungsmessvorichtung bestehend aus einer Laserstrahlsende/-empfangseinrichtung verwendet, die aus der Laufzeitmessung eines ausgesandten und an einem Konturpunkt reflektierten Laser-Abtaststrahles die Entfernung zu diesem bestimmt. Die Laser-Abtaststrahlen sind nun in einem bestimmten Winkelbereich schrittweise oder stufenlos in einer Abtaststrahlen-Ebene verschwenkbar. Dabei ist die Laser-Entfernungsmessvorichtung so an der Landmaschine ausgerichtet angebracht ist, daß die Abtaststrahlen-Ebene in einem spitzen Winkel in Fahrtrichtung nach vom zum Boden geneigt ist. Anhand einer Auswerteeinrichtung wird zu jedem Schwenkwinkel aus der gemessenen Entfernung, der Anordnung und Ausrichtung der Laser-Entfernungsmessvorichtung an der Landmaschine (Anbringungshöhe, Neigungswinkel zum Boden) die zu dem Schwenkwinkel korrespondierende Lage des Konturpunktes (vertikale und horizontale Position über dem Boden) ermittelt.

Die erfindungsgemäße Verwendung und Anordnung einer derartigen Laserentfernungsmeß-Vorrichtung hat gegenüber der aus dem Stand der Technik bekannten Abtastvorrichtung mittels Ultraschallsensoren erhebliche Vorteile.

Für die erfindungsgemäße Abtastvorrichtung ist nur eine Laserstrahlsende/-empfangseinrichtung notwendig, dadurch ist diese Abtastvorrichtung an Landmaschinen im Vergleich zur bekannten Ultraschall-Abtastvorrichtung mit mehreren Ultraschallsensoren wesentlich kostengünstiger. Bei der erfindungsgemäßen Vorrichtung erfolgt die Abtastung einer Kontur vor der Landmaschine an verschiedenen Punkten quer zur Fahrrichtung durch das Verschwenken des Laser-Abtaststrahles. Die Zahl der Abtastpunkte auf einer Abtastlinie ist dabei wesentlich größer als bei der vorbekannten Ultraschall-Abtastvorrichtung. So ergibt sich beispielsweise bei einem Schwenkwinkelbereich von ± 45° und einer Verschwenkung des Laser-Abtaststrahl in 0,5° Schritten eine Zahl von 180 Abtastpunkten Aufgrund der geringen Divergenz des Laser-Abtaststrahles ist eine relativ hohe Auflösung (Dichte der Abtastpunkte) zu erzielen, da die Zentren benachbarter Abtastpunkte dicht beieinander liegen können, ohne daß die Abtastflecken auf der abzutastenden Kontur überlappen und eine eindeutige Zuordnung des Reflektionsortes nicht mehr möglich wäre.

Eine gegenseitige Beeinflussung benachbarter Sensoren wie bei der vorbekannten Abtastvorrichtung entfällt, da die Entfernungen zu den Konturpunkten nacheinander ermittelt werden.

Eine weit vorausschauende Abtastung, wie sie zum Beispiel für eine automatische Lenkung entlang einer abgetasteten Kontur notwendig ist, ist mit der erfindungsgemäßen Vorrichtung in einfacher Weise zu realisieren. So ist beispielsweise bei einer Anbringungshöhe über dem Boden von 380 cm an der Landmaschine und einem Neigungswinkel (ϕ) zum Boden von 65° ein Abtastabstand vor der Landmaschine von ca. 8,15m zu erzielen. Aufgrund der geringen Divergenz des Laser-Abtaststrahles kommt es bei diesem relativ großen Abtastabstand nicht zu einer nicht akzeptierbaren Vergrößerung des Abtastfleckes wie im Fall der Ultraschallsensoren. Eine derart weit vorausschauende Konturabtastung ist mit der vorbekannten Ultraschall-Abtastvorrichtung nicht zu realisieren. Dies würde ein entsprechend langes Haltegestänge vor der Landmaschine zur Aufnahme der Befestigungsleiste für die Ultraschallsensoren erfordern, wodurch das ganze System vollkommen unpraktikabel würde.

Die Reflexion des Laser-Abtaststrahles ist im Unterschied zu Ultraschall relativ unabhängig von der witterungsbedingten Beschaffenheit des abzutastenden Erntegutes, wodurch die Einsatzmöglichkeiten der Laser-Abtastvorrichtung erhöht werden.

In einer bevorzugten Ausfuhrungsform wird der Laser-Abtaststrahl über einen drehbaren Spiegel oder über eine bewegbare Fokussiereinrichtung verschwenkt. Damit läßt sich eine relativ hohe Zahl von Abtastschwenkverläufen pro Sekunde und damit eine hohe Abtastfrequenz erzielen, was insbesondere bei höheren Fahrgeschwindigkeiten der Landmaschine wichtig ist. So ist beispielsweise bei Verwendung von Galvanometer-Motoren für die Drehung des Rotationsspiegels eine Verschwenkung im Millisekunden-Bereich möglich. Damit ist auch eine hohe Abtastpunktdichte in Fahrtrichtung der Landmaschine zu erzielen.

In einer alternativen Ausführungsform für die Verschwenkung des Laser-Abtaststrahles ist es vorgesehen, die Laserentfernungsmeß-Vorichtung selbst zur Verschwenkung des Laser-Abtaststrahles zu verschwenken.

In einer Ausführungsform ist es vorgesehen, die Laserentfernungsmeß-Vorrichtung (LM) innerhalb der Fahrerkabine, hinter der Frontscheibe anzubringen. Staub auf der Scheibe kann aus den Signalen herausgefiltert werden und beeinträchtigt somit die Zuverlässigkeit der Abtastung nicht, die Scheibe selbst beeinträchtigt ebenfalls die Funktionstüchtigkeit nicht.

Die erfindungsgemäße Abtastvorrichtung ist aufgrund der hohen Genauigkeit, Zuverlässigkeit und aufgrund der einfachen Bauweise und Handhabung für die verschiedensten Anwendungen einsetzbar. Auf die verschieden Anwendungsverfahren der erfindungsgemäßen Vorrichtung beziehen sich die Verfahrensansprüche.

So ist es zum einen vorgesehen, während der Fahrt der Landmaschine fortlaufend entlang des zurückgelegten Weges, die Kontur über die Abtastbreite zu ermitteln und abzuspeichern. Hiermit kann die Kontur, von durch die Landmaschine aufzunehmenden Erntegutschwaden, sehr genau abgetastet und aufgezeichnet werden. An Hand der abgetasteten Kontur wird dann in einer Auswerteeinrichtung jeweils der Querschnitt des abgetasteten Erntegutschwades über der Bodengrundline ermittelt. Dabei kann der so bestimmte Schwadquerschnitt zur Einstellung der Fahrgeschwindigkeit der Landmaschine verwendet werden, wobei die Regelung beispielsweise auf konstante oder maximale Erntegutaufnahme eingestellt sein kann. Bei einem sich verkleinernden Schwadquerschnitt wird die Fahrgeschwindigkeit erhöht, so daß das pro Zeiteinheit aufgenommene Erntegut konstant ist. Wenn erntegutspezifische Dichteangaben vorliegen, so lassen sich diese ebenfalls mit dem ermittelten Schwadquerschnitt verknüpfen und in Verbindung mit einer ermittelten, überfahrenen Schwadstrecke, neben einer Volumenberechnung auch eine Gewichtsangabe, des während der Fahrt (online) aufgenommen Ernteguts, ermitteln. Darüber hinaus werden die so bestimmte schwadspezifischen Größen jeweils auch zur Einstellung von optimalen Arbeitsparametern der Erntemaschine verwendet.

In einer vorteilhaften Ausgestaltung der Erfindung, kann die innerhalb der Verschwenkzeit des Abtaststrahls ermittelte Vorfahrtstrecke der Landmaschine, mit in die Entfernungsmessung einbezogen werden.

In besonders vorteilhafter Weise wird zur Entlastung des Landmaschinenführers die abgetastete Schwadkontur, vorzugsweise die Schwadmitte, über bekannte Mittel während der Schwadaufnahme zur automatischen Lenkung der Landmaschine eingesetzt

In Verbindung mit einem an der Landmaschine angeordneten Echtzeitortungssystem (Satellitennavigationssystem, GPS) ist es möglich, über die gesamte Einsatzfläche und/oder über Teilflächenbereiche hinweg die abgetasteten Konturen jeweils terrestrischen Koordinaten (geographische Länge und Breite, ggf. Höhe über NN - bzw. kartesische Koordinaten (x,y) bezogen auf einen Punkt des Feldes) zuzuordnen. Dabei werden neben den schwadspezifischen Größen auch die Abstände zwischen benachbarten Schwaden ermittelt und aus diesen Flächendaten und/oder Ertragsdaten generiert Diese werden dann zur weiteren Verwendung gespeichert.

Unter Verwendung eines Sensors an der Landmaschine, der die Schieflagen der Landmaschine beispielsweise beim Einsatz am Hang, beim Fahren in Senken oder über Bodenwellen ermittelt, kann, in Verbindung mit einem an der Landmaschine angeordneten GPS-Ortungssystem, durch die Abtastung der Bodenkontur, unter Berücksichtigung der Landmaschinen-Schieflagen und - Position, ein hochgenaues, dreidimensionales Geländemodell der landwirtschaftlichen Nutzfläche erstellt werden. Die Schieflagen der Erntemaschine können auch für eine einfache Korrektur der Abtastentfernung benutzt werden.

Eine weitere Einsatzmöglichkeit der Laser-Abtastvorrichtung ist die Ermittlung des Abstandes einer Getreideährenoberfläche zur Erntemaschine. Dieses Signal wird zur Regelung der Schneidwerks-/ bzw. Haspelhöhe verwendet, wodurch eine erhebliche Entlastung des Fahrers erreicht wird. In diesem Einsatzfall können die ermittelten Abtastentfernungen weiter für die Ermittlung der tatsächlichen Schneidwerksauslastung herangezogen werden. Dafür werden die Schneidwerksgrenzen jeweils einem Schwenkwinkel der Laser-Abtastvorrichtung zugeordnet. Findet in diesem Schwenkbereich ein Kontursprung statt, so liegt an dieser Stelle eine Gutkante vor. Zwischen dieser ermittelten Gutkante und der von diesem am weitesten wegliegenden Schneidwerksgrenze läßt sich dann die Auslastung ermitteln.
Sollten durch Lagerstellen im Bestand mehrere Gutkantensprünge vorliegen, werden die jeweils äußeren Gutkantensprünge oder ein äußerer Gutkantensprung und eine der definierten Schneidwerksgrenze zur Schneidwerksauslastungsermittlung herangezogen. Dieser Auslastungswert kann dann über bekannte Mittel aufgezeichnet und/oder zur genaueren Flächenberechnung verwendet werden.

Eine weitere Einsatzmöglichkeit besteht in dem Abtasten von Fahrgassen, die durch vorhergehende Arbeitseinsätze (z.B. Saat und Ausbringen von Pflanzenschutzmitteln) in einem Erntegutbestand vorhanden sind, wobei anhand dieser abgetasteten Fahrgassen über bekannte Mittel eine automatische Lenkung der Erntemaschine durchgerührt wird.

Eine weitere vorteilhafte Verwendung der Laser-Abtastvorrichtung ist das Abtasten von Bearbeitungsspuren. Damit kann bei der Bearbeitung eine Zugmaschine über bekannte Mittel automatisch entlang einer abgetasteten Spur gelenkt werden. Besonders geeignet ist diese Vorrichtung zum Abtasten von Spuren/ bzw. Furchen, wie sie beim Flügen entstehen. Vorteilhaft erweist sich dabei insbesondere der weite Erfassungsbereich der Vorrichtung. Bei einer Bearbeitungsrichtungsumkehr muß die Laser-Abtastvorrichtung nicht mechanisch verschwenkt, sondern lediglich das Regelsignal mit einem veränderten Offset versehen der automatischen Lenkeinrichtung zugeführt werden. Hierzu können beispielsweise an einem Pflug-vorhandene Sensoren die Stellung des Pflugrahmens ermitteln und der Auswerte-/ bzw. Lenkreglereinrichtung mitteilen. Der Offset kann weiter per Hand und/oder durch eine Schieflagenermittlung der Landmaschine beeinflußbar sein

In einer weiteren Ausgestaltung kann die Laser-Abtastvorrichtung bei Landmaschinen, die eine sich anschließende Bearbeitungsspur nur in der zuvor gewählten, gleichen Bearbeitungsrichtung zulassen (z.B.: Beetflug, Mähwerke), die Laser-Abtastvorrichtung direkt über der Fahrspur bzw. Bearbeitungskante an dem Bearbeitungsgerät oder dem Zufahrzeug bzw. der Erntemaschine angebracht werden. Eine Umrechnung der ermittelten Spurposition oder ein Aufschalten eines Offsets kann dann entfallen.

Gestützt auf die Laser-Abtastvorrichtung sind außerdem Warnverfahren für den Betrieb der Landmaschine implementierbar Durch die Vorgabe eines Schwellwert für die Höhenzunahme und/oder die absolute Höhe einer abgetasteten Kontur in Fahrtrichtung wird bei einer Überschreitung des Schwellwertes ein Warnsignal für den Bediener der Landmaschine erzeugt. Damit wird der Fahrer z.B.: eines Mähdreschers vor gefährlichen Bodenwellen oder Hindernissen gewarnt, die zu einer Beschädigung der Arbeitsgeräte führen könnten.

Generell können mit Hilfe der Laser-Abtastvorrichtung Hindernisse (z.B. Strommasten, Bäume, Steine etc.) auf dem Feld erkannt werden, die aufgrund ihrer vertikalen Erstreckung nicht innerhalb eines erlaubten Konturerwartungswerte-Bereiches liegen.

Anhand der beigefügten Zeichnungen soll die Erfindung näher veranschaulicht werden. Es zeigt.
- Fig. 1: die Seitenansicht eines Feldhäckslers mit Laser-Abtastvorrichtung,
- Fig. 2: die Draufsicht auf einen Feldhäcksler mit Laser-Abtastvorrichtung zur Schwadabtastung,
- Fig 3: die dreidimensionale Darstellung einer mit der erfindungsgemäßen Vorrichtung abgetasteten Schwadkontur entlang der Fahrstrecke,
- Fig. 4: den Querschnitt eines abgetasteten Schwadquerschnittes über einem geneigten Boden,
- Fig. 5: die Draufsicht aufverschiedene Schwade auf einer Wiese,
- Fig. 6: ein Blockschaltbild der Auswerteeinrichtung mit ihren Eingangssignalen,
- Fig. 7 bis Fig. 10: die geometrischen Verhältnisse der Laserstrahl- Abtastung.

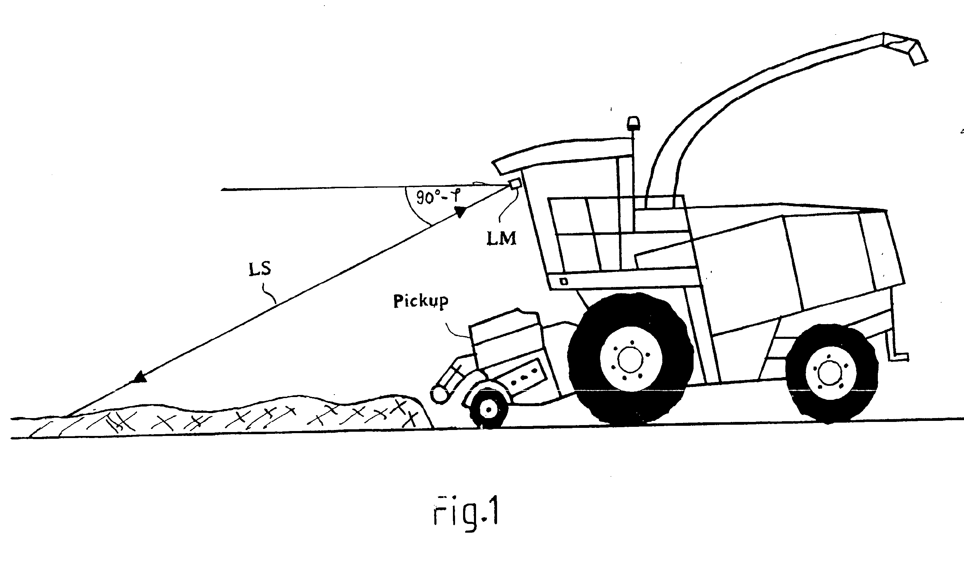

In Fig. 1 ist ein Feldhäcksler mit Pickup als Vorsatzgerät zur Aufnahme von im Schwad liegenden Erntegut gezeigt, an dem die Laserentfernungsmeß-Vorrichtung (LM) in Höhe der Fahrerkabine (ca. 3,80 m) unter einem Winkel von ca. 65° zum Boden geneigt angebracht ist (schematisch dargestellt). Damit ergibt sich ein Abtastabstand von ungefähr 8,15 m vor der Laserentfernungsmeß-Vorrichtung. Der Anbringungsort an der Landmaschine wird jeweils in Abhängigkeit von den baulichen Eigenarten der Landmaschine und den spezifischen Einsatzzwecken vorgegeben und sollte zur optimalen Konturerkennung möglichst hoch gewählt werden. Um eine hohe Einstell-Flexibilität zu erreichen, wird die Laserentfernungsmeß-Vorrichtung (LM) vorzugsweise höhen- und neigungsverstellbar an der Landmaschine montiert.

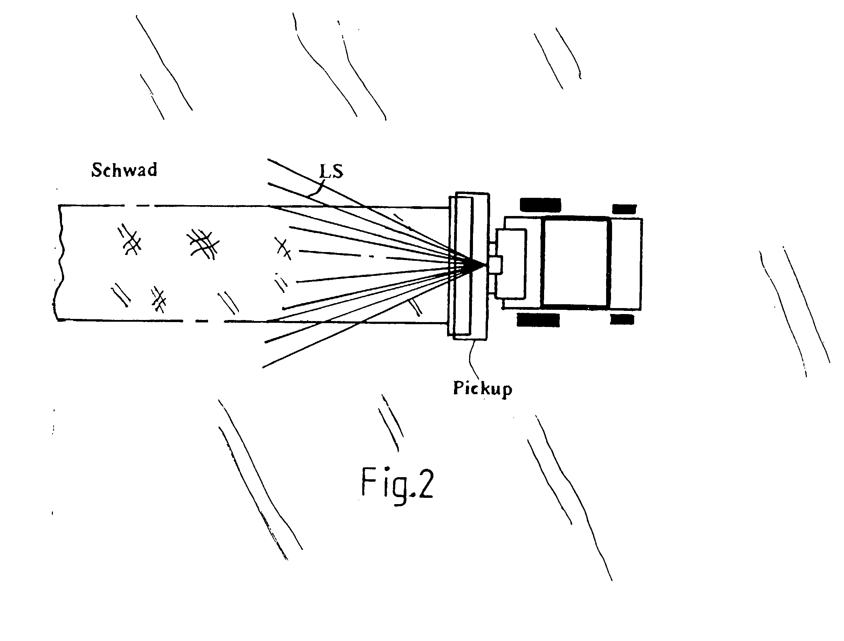

Zum besseren Verständnis ist in Fig. 2 eine Draufsicht auf den Feldhäcksler mit Pickup vor dem aufzunehmenden Schwad gezeigt. Die Laserentfernungsmeß-Vorrichtung (LM) befindet sich bezogen auf die Erstreckung des Feldhäckslers quer zur Fahrtrichtung in der Mitte der Maschine und tastet die Schwadkontur zu beiden Seiten der Landmaschinen-Längsrichtung symmetrisch ab.

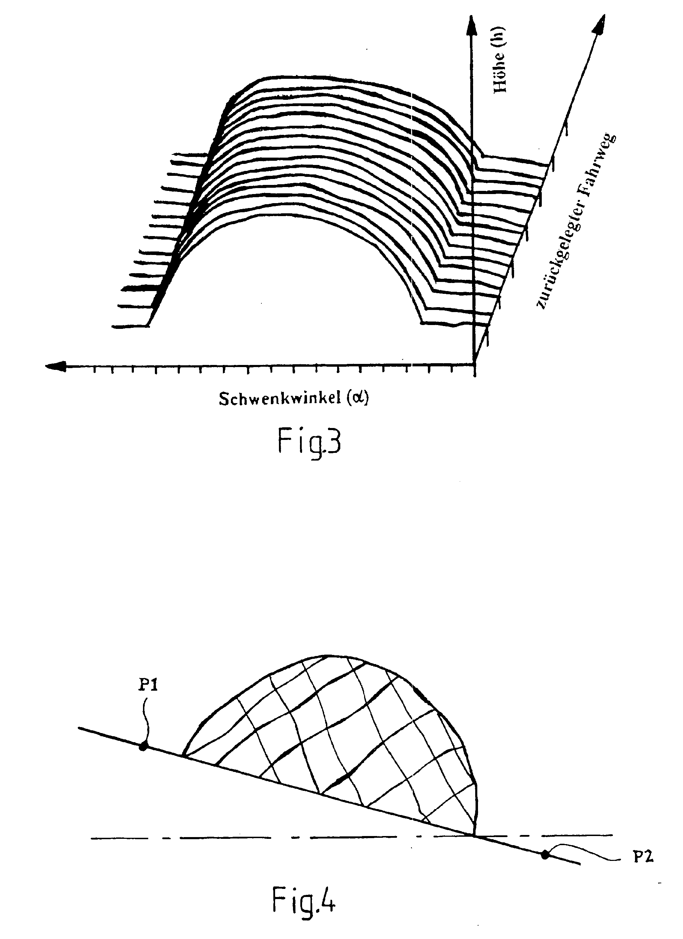

Fig 3 zeigt schematisch eine dreidimensionale Darstellung der mit der Laserentfernungsmeß-Vorrichtung (LM) abgetasteten Schwadkontur entlang des zurückgelegten Fahrweges. Die Abstände der Konturlinien in Fahrtrichtung ergeben sich aus der Abtastfrequenz (Verschwenkzeit für den Laser-Abtaststrahl) und der Fahrgeschwindigkeit.

Fig. 4 zeigt eine abgetastete Schwadkontur über einer geneigten Bodengrundlinie (P1-P2). Unter Berücksichtigung des wahren, geneigten Verlaufes der Bodengrundlinie, die sich aus einer Interpolation der Bodenkonturen links und rechts neben dem Schwad ergibt, läßt sich gegenüber der Horizontalen eine genauere Berechnung des Schwadquerschnittes durchführen.

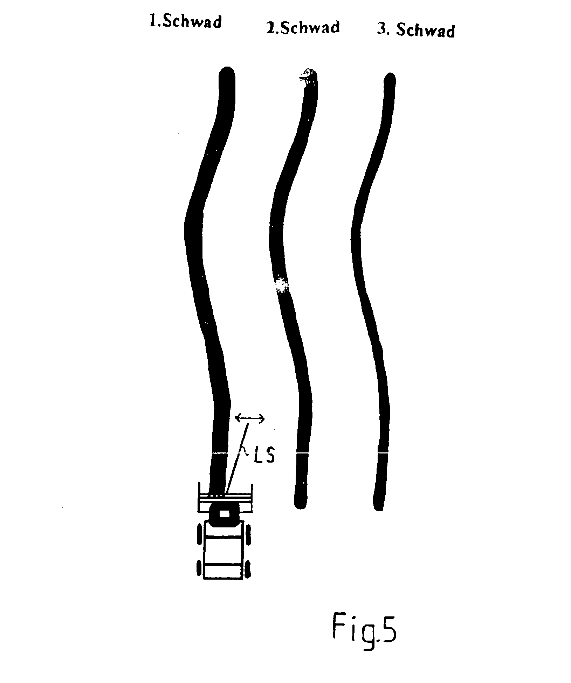

Fig. 5 zeigt eine Draufsicht auf einen Feldhäcksler bei der Aufnahme verschieden großer, benachbarter Erntegutschwaden.

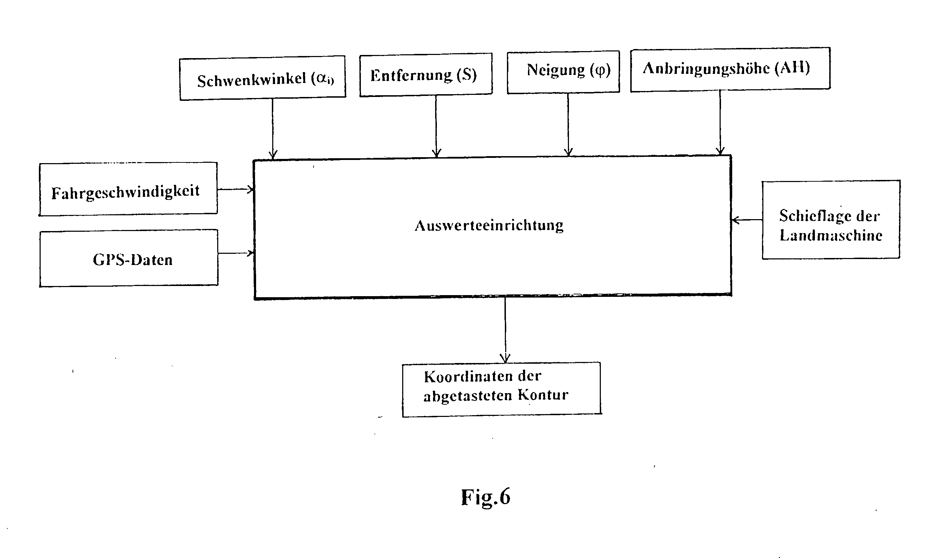

Fig 6 zeigt ein Blockschaltbild der Auswerteeinrichtung zur Berechnung der abgetasteten Kontur-Koordinaten. Als Eingangssignale empfängt die Auswerteeinrichtung die gemessene Entfernung (S) zu dem jeweils abgetasteten Konturpunkt, den Schwenkwinkel (α) unter dem dieser Konturpunkt abgetastet wurde, sowie die Neigung (ϕ) und die Anbringungshöhe (AH) der Laserentfernungsmeß-Vorrichtung (LM) Aus diesen Daten errechnet die Auswerteeinrichtung dann die Kontur-Koordinaten. In vorteilhaften Ausführungsformen empfängt die Auswerteeinrichtung weitere Eingangssignale wie die Fahrgeschwindigkeit, GPS-Daten oder Informationen über die Schieflage der Landmaschine. Die Auswerteeinrichtung kann in die Laserentfernungsmeß-Vorrichtung (LM) integriert sein oder aber als eine oder mehrere separate Komponenten ausgeführt sein. Vorzugsweise ist die Auswerteeinrichtung mit dem zentralen Steuerungs- bzw. Fahrzeugbussystem der Landmaschine verbunden

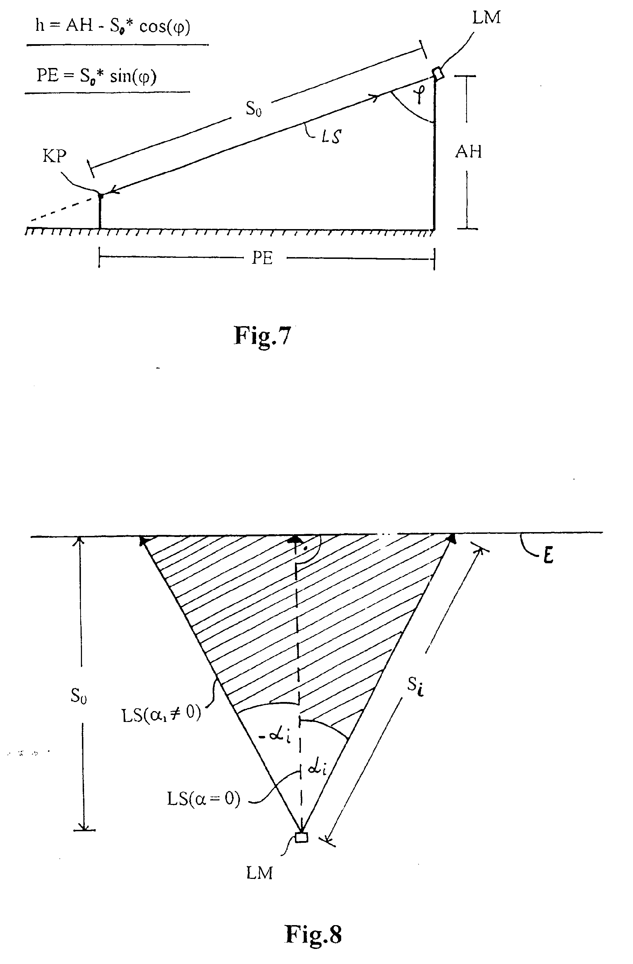

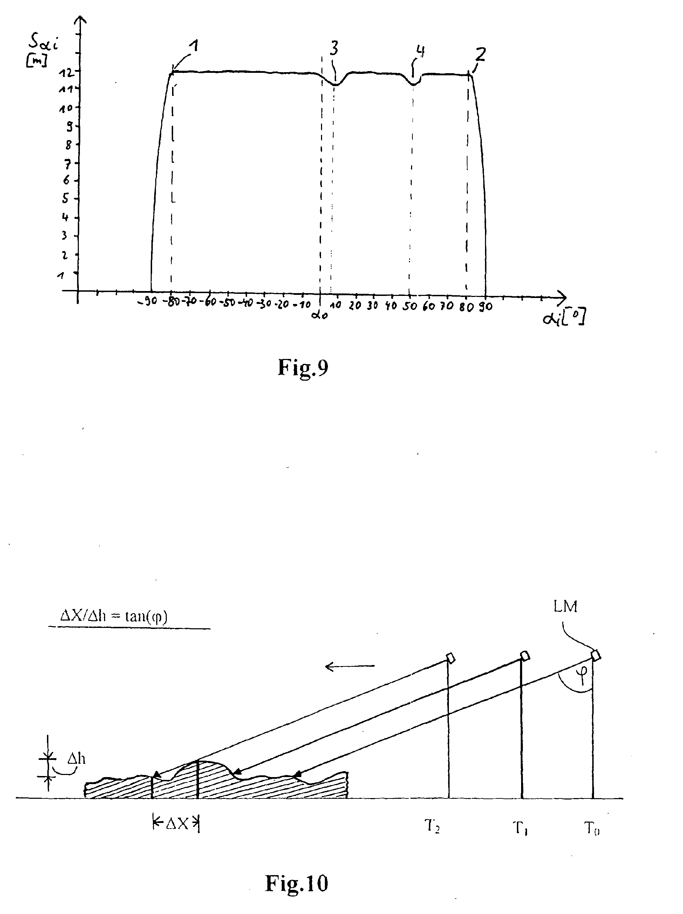

Zum besseren Verständnis zeigen die Figuren 7 und 10 die geometrischen Verhältnisse der Laserstrahl-Abtastung.

Dabei bedeutet:
- AH:: die Anbringungshöhe der Laserentfernungsmeß-Vorrichtung an der Landmaschine über dem Boden,
- ϕ:: den Neigungswinkel der Abtaststrahlen-Ebene zur Vertikalen,
- h:: die Höhe des abgetasteten Konturpunktes über dem Boden,
- PE:: die projizierte Entfernung zwischen der Laserentfernungsmeß-Vorrichtung und dem abgetasteten Konturpunkt,
- S:: die gemessene Entfernung zwischen der Laserentfernungsmeß-Vorrichtung und einem abgetasteten Knotenpunkt,
- αᵢ :: der i-te Schwenkwinkel des Laser-Abtaststrahles in der Abtaststrahlen-Ebene,
- So:: die gemessene Entfernung für den Mittelpunktstrahl,
- Sᵢ.: die gemessene Entfernung für den um αᵢ verschwenkten Laser-Abtaststrahl,

In Fig. 7 sind die geometrischen Verhältnisse für den Mittelpunktstrahl (α = 0) dargestellt. Die Höhe des abgetasteten Konturpunktes (KP) bestimmt sich aus der gemessenen Entfernung (So), der Anbringungshöhe (AH) und dem Neigungswinkel (ϕ) zu: h=AH-S₀×cos(ϕ). Die auf den Boden projizierte Entfernung (PE) zu dem abgetasteten Konturpunkt (KP) bestimmt sich zu: PE=S₀×sin(ϕ).

Fig. 8 zeigt eine Draufsicht auf einen Konturverlauf (E). In diesem Verlauf sind keine Konturveränderungen enthalten. Die Entfernung (S) beschreibt hier den Abstand der Laserentfernungsmeß-Vorrichtung (LM), in Fahrtrichtung im ebenen Gelände, zum Boden. Um Meßwerte für eine orthogonal zur Fahrtrichtung liegende Kontur (E) im Abstand (S₀), bei welcher der Mittelpunktsstrahl direkt zum Boden gemessen wird, zu erhalten, müssen die aus der Mittellage verschwenkten Abstandsmeßwerte LS(α≠0) umgerechnet werden Die Umrechnungsformel lautet dafür. S_{αi}=S₁×cos(αᵢ).

Fig. 9 stellt ein Diagramm dar, in welchem Abstandswerte die wie nach Figur 8 korrigiert wurden, angezeigt werden. Der hier verwendete Abtaststrahl (LS) hat eine Reichweite von ca. 50m. An den Punkte (1) bzw (2) wird die maximale Abtastweite überschritten und der Strahl wird nicht mehr reflektiert. Meßwerte außerhalb diesen Schwenkbereichs sind daher ungültig. Aus der Berechnung ergibt sich dann außerhalb des gültigen Bereichs jeweils ein Cosinusverlauf bis an den Abtastendanschlag.

An den Stellen (3) und (4) wurden jeweils eine kürzere Abtastweite des Abtaststrahls ermittelt. An diese Stellen liegen Erhöhungen in der Kontur vor. Sie zeigen jeweils die Lage und den Querschnitt eines Schwades an. Der Schwad an der Stelle (3) liegt etwas seitlich von der Mitte der Erntemaschinenfahrtrichtung. Die Schwadmitte kann ermittelt und bezogen auf den Mittelpunktstrahl zur automatischen Lenkung einer Landmaschine verwendet werden. An der Stelle (4) wird ein weiterer Schwad dargestellt. Über die jeweils ermittelten Winkellagen der beiden Schwadmittelpunkte, kann der Abstand der Schwaden ermittelt und in Verbindung mit den schwadspezifischen Größen (Länge, Querschnittsfläche, Dicht) einer Ernteflächenermittlung bzw. einer Ertragskartierung zugeführt werden.

In Fig. 10 ist ein Längsschnitt durch einen Schwadausschnitt gezeigt. Es werden drei hintereinander folgende Meßpunkte dargestellt. Dabei wird der zugehörige Schwenkwinkel α nicht berücksichtigt. Aufgrund von Höhenunterschieden im Schwad ergeben sich Abschattungen des Laser-Abtaststrahles (LS). Mit folgendem Zusammenhang wird die maximal noch abtastbaren Änderung in der Konturhöhe (Δh) bei einem gewissen Abstand (ΔX) der abgetasteten Konturpunkte in Fahrtrichtung beschrieben. Sie lautet. Δh = ΔX/tanf(ϕ) Ist beispielsweise durch eine Fahrgeschwindigkeit von v= 10km/h und einer Schwenkwinkelfrequenz 25Hz (Abtastfrequenz) ein Abtastabstand von ΔX=11,1cm vorgegeben, so ergibt sich bei einem Neigungswinkel von ϕ=65° ein maximaler, abtastbarer Höhenunterschied von Δh=5,2cm. Ein derartiger Wert ist für die verfahrensgemäßen Anwendungen voll ausreichend.

## Patentansprüche

1. Vorrichtung an Landmaschinen zur berührungslosen Abtastung von sich über den Boden erstreckenden Konturen mit einer Laserentfernungsmeß-Vorrichtung (LM) bestehend aus einer Laserstrahlsende/-empfangseinrichtung, die aus der Laufzeitmessung des ausgesandten und an einem Konturpunkt reflektierten Laser-Abtaststrahles (LS) die Entfernung zu diesem bestimmt und wobei der Laser-Abtaststrahl (LS) in einem bestimmten Winkelbereich schrittweise oder stufenlos in einer Abtaststrahlen-Ebene verschwenkbar ist und die Laserentfernungsmeß-Vorrichtung (LM) so an der Landmaschine ausgerichtet angebracht ist, daß die Abtaststrahlen-Ebene in einem spitzen Winkel (ϕ) in Fahrtrichtung nach vom zum Boden geneigt ist,
**gekennzeichnet durch,**
- eine Auswerteeinrichtung, die zu jedem Schwenkwinkel (α) aus der gemessenen Entfernung (S), der Anordnung und Ausrichtung der Laserentfernungsmeß-Vorrichtung (LM) an der Landmaschine die zu dem Schwenkwinkel (α) korrespondierendevertikale und horizontale Lage des Konturpunktes ermittelt und wobei
- während der Fahrt der Landmaschine fortlaufend aus den ermittelten Entfemungswerten die Kontur über der Abtastbreite ermittelt und gespeichert wird und wobei
- in der Auswerteinrichtung an Hand der abgetasteten Kontur der Querschnitt eines abgetasteten Erntegutschwades über der Bodengrundlinie ermittelt wird.

2. Vorrichtung nach Anspruch 1,
**dadurch gekennzeichnet, daß**
der Laser-Abtaststrahl (LS) über einen drehbaren Spiegel oder einer bewegbaren Fokusiereinrichtung verschwenkbar ist.

3. Vorrichtung nach Anspruch 1,
**dadurch gekennzeichnet, daß**
die Laserentfernungsmeß-Vorrichtung (LM) selbst zur Verschwenkung des Laser-Abtaststrahles (LS) verschwenkt wird.

4. Vorrichtung nach einem der vorstehenden Ansprüchen,
**dadurch gekennzeichnet, daß**
die Laserentfernungsmeß-Vorrichtung (LM) höhenverstellbar an der Landmaschine befestigt ist.

5. Vorrichtung nach einem der vorstehenden Ansprüchen,
**dadurch gekennzeichnet, daß**
die Laserentfernungsmeß-Vorrichtung (LM) neigungsverstellbar an der Landmaschine befestigt ist, so daß unterschiedliche Neigungen des Laser-Abtaststrahles (LS) zum Boden einstellbar sind.

6. Vorrichtung nach einem der vorstehenden Ansprüchen,
**dadurch gekennzeichnet, daß**
die Auswerteeinrichtung der Laser-Abtastvorrichtung ein Signal von einem an der Landmaschine angebrachten Neigungssensor zur Bestimmung der Schieflagen der Landmaschine empfängt und die jeweilige Schieflage bei der Konturbestimmung berücksichtigt.

7. Verfahren zur Konturabtastung mit einer Vorrichtung nach Anspruch 1,
**dadurch gekennzeichnet, daß**
aus der Kontur und/oder aus der Summen von aneinanderfolgenden Konturen eine von der Landmaschine zu verfolgende Spur ermittelt wird.

8. Verfahren nach den Ansprüchen 1,
**dadurch gekennzeichnet, daß**
die ermittelte Spur zur automatischen Lenkung einer Landmaschine entlang dieser Spur dient.

9. Verfahren nach den Ansprüchen 7 bis 8,
**dadurch gekennzeichnet, daß**
die Mitte der ermittelte Spur berechnet und für weitere Berechnungen verwendet wird.

10. Verfahren nach den Ansprüchen 7 bis 9,
**dadurch gekennzeichnet, daß**
das für die automatische Lenkung generierte Signal, durch einen Offset, der per Hand und/oder von den Schieflagen der Landmaschine und/oder durch eine Arbeitsrichtungserkennung beeinflußbar ist, so angepaßt wird, daß ein Parallelversatz zwischen der ermittelteten Spur und dem Mittelpunktstnihls möglich ist.

11. Verfahren nach den Ansprüchen 7 bis 10,
**dadurch gekennzeichnet, daß**
die ermittelte Spur ein Furche ist und die Landmaschine entlang der abgetasteten Furche gelenkt wird.

12. Verfahren den Ansprüchen 7 bis 10,
**dadurch gekennzeichnet, daß**
die ermittelte Spur ein Schwad ist und in einer Auswerteeinrichtung jeweils der Querschnitt des erkannten Erntegutschwades über der Bodengrundline ermittelt wird.

13. Verfahren nach Anspruch 12,
**dadurch gekennzeichnet, daß**
der Verlauf der Bodengrundlinie unter einem abgetasteten Erntegutschwad durch Abtasten der nicht mit Schwad bedeckten Bodengrundlinie zu beiden Seiten des Erntegutschwades ermittelt wird und zur genaueren Bestimmung des Schwadquerschnittes herangezogen wird.

14. Verfahren den Ansprüchen 12 bis 13,
**dadurch gekennzeichnet, daß**
der ermittelte Schwadquerschnitt in Verbindung mit der Abtastfrequenz der Laserentfernungsmeß-Vorrichtung und der Fahrgeschwindigkeit der Erntemaschine zur Schwadvolumenermittlung dient.

15. Verfahren nach den Ansprüchen 12 bis 14,
**dadurch gekennzeichnet, daß**
das ermittelte Schwadvolumen in Verbindung mit der Schwaddichteangabe zur Ertragsmengenmessung dient.

16. Verfahren nach den Ansprüchen 12 bis 15,
**dadurch gekennzeichnet, daß**
die Abstände zwischen den benachbarten Schwaden ermittelt und zur Ermittlung der Erntefläche dient.

17. Verfahren den Ansprüchen 12 und 16,
**dadurch gekennzeichnet, daß**
das mindestens eine der ermittelten Größen zur Anzeige gebracht und/oder zur Einstellung von Arbeitsparametern der Landmaschine verwendet wird.

18. Verfahren nach den Ansprüchen 12 bis 17,
**dadurch gekennzeichnet, daß**
das mindestens eine ermittelte Größe zur Einstellung der Fahrgeschwindigkeit der Landmaschine verwendet wird.

19. Verfahren den Ansprüchen 7 bis 18,
**dadurch gekennzeichnet, daß**
über die gesamte Einsatzfläche oder über Teilflächenbereiche hinweg, mindestens eine aus der abgetasteten Konturen ermittelten Größe, durch ein an der Landmaschine angeordnetes Echtzeitortungssystem terrestrischen Koordinaten zugeordnet und zur weiteren Verwendung gespeichert wird.

20. Verfahren zur Konturabtastung mit einer Vorrichtung nach den Ansprüchen 1 bis 6,
**dadurch gekennzeichnet, daß**
die Bodenkontur einer landwirtschaftlichen Nutzfläche zur Erstellung eines hoch genauen dreidimensionalen Geländemodells abgetastet wird, wobei die jeweils abgetasteten Konturpunkte des Bodens über ein an der Landmaschine angeordnetes Echtzeitortungssystem unter Berücksichtigung mindestens einer Landmaschinen-Schieflage terrestrischen Koordinaten zugeordnet werden.

21. Verfahren zur Konturabtastung mit einer Vorrichtung nach den Ansprüchen 1 bis 6,
**dadurch gekennzeichnet, daß**
die Ährenoberfläche eines Getreidefeldes abgetastet wird und die ermittelte Kontur zur Regelung der Schneidwerkshöhe und/oder der Haspelhöhe und/oder der Ermittlung der Schneidwerksauslastung dient.

22. Verfahren zur Konturabtastung mit einer Vorrichtung nach den Ansprüchen 1 bis 6,
**dadurch gekennzeichnet, daß**
Fahrgassen aufgrund vorhergehender Arbeitseinsätze in einem Erntegutbestand abgetastet werden und abgetastete Fahrgassen der automatischen Lenkung einer Landmaschine dienen.

23. Verfahren zur Konturabtastung mit einer Vorrichtung nach den Ansprüchen 1 bis 6,
**dadurch gekennzeichnet, daß**
ein Schwellwert für die Höhenzunahme und/oder die absolute Höhe einer abgetasteten Kontur in Fahrtrichtung vor der Landmaschine definiert wird und bei einer Überschreitung des Schwellwertes ein Warnsignal für den Bediener der Landmaschine erzeugt wird.

24. Verfahren zur Konturabtastung mit einer Vorrichtung nach den Ansprüchen 1 bis
**dadurch gekennzeichnet, daß**
die Vorrichtung zur Erkennung von Hindernissen eingesetzt wird.

25. Verfahren zur Konturabtastung mit einer Vorrichtung nach den Ansprüchen 1 bis 6
**dadurch gekennzeichnet, daß**
die während der Verschwenkzeit des Abtaststrahls ermittelten Entfernung jeweils um das überfahrene Streckenstück korrigiert wird.

## Claims

1. An apparatus on agricultural machines for contactless scanning of contours extending over the ground, comprising a laser distance measuring device (LM) comprising a laser beam transmitting/receiving device which determines the distance in relation to a contour point from the transit time measurement of the laser scanning beam (LS) which is emitted and reflected at the contour point, and wherein the laser scanning beam (LS) is pivotable in a given angular range stepwise or steplessly in a scanning beam plane and the laser distance measuring device (LM) is mounted to the agricultural machine in such an orientation that the scanning beam plane is inclined at an acute angle (ϕ) in a direction of travel forwardly relative to the ground,
**characterised by**
- an evaluation device which in relation to each pivotal angle (α) ascertains from the measured distance (S), the arrangement and orientation of the laser distance measuring device (LM) on the agricultural machine, the vertical and horizontal position of the contour point, that corresponds to the pivotal angle (α), and wherein
- during the travel movement of the agricultural machine the contour is continuously ascertained from the ascertained distance values over the scanning width and stored, and wherein
- in the evaluation device on the basis of the scanned contour the cross-section of a scanned crop material swathe is ascertained over the ground base line.

2. Apparatus according to claim 1 **characterised in that** the laser scanning beam (LS) is pivotable by way of a rotatable mirror or a movable focusing device.

3. Apparatus according to claim 1 **characterised in that** the laser distance measuring device (LM) itself is pivoted for pivoting the laser scanning beam (LS).

4. Apparatus according to one of the preceding claims **characterised in that** the laser distance measuring device (LM) is fixed in height-adjustable relationship on the agricultural machine.

5. Apparatus according to one of the preceding claims **characterised in that** the laser distance measuring device (LM) is fixed in inclination-adjustable relationship on the agricultural machine so that different inclinations of the laser scanning beam (LS) can be set relative to the ground.

6. Apparatus according to one of the preceding claims **characterised in that** the evaluation device of the laser scanning device receives a signal from an inclination sensor mounted to the agricultural machine for determining the slanting positions of the agricultural machine and takes account of the respective slanting position in the contour-determining operation.

7. A method of contour scanning with an apparatus according to claim 1 **characterised in that** a track to be followed by the agricultural machine is ascertained from the contour and/or from the total of successive contours.

8. A method according to claim 1 **characterised in that** the ascertained track serves for automatic steering of an agricultural machine along said track.

9. A method according to claims 7 and 8 **characterised in that** the centre of the ascertained track is calculated and is used for further calculations.

10. A method according to claims 7 to 9 **characterised in that** the signal generated for automatic steering is so adapted by an offset which can be influenced by hand and/or by the slanting positions of the agricultural machine and/or by working direction recognition so that a parallel displacement is possible between the ascertained track and the centre point beam.

11. A method according to claims 7 to 10 **characterised in that** the ascertained track is a furrow and the agricultural machine is steered along the scanned furrow.

12. A method according to claims 7 to 10 **characterised in that** the ascertained track is a swathe and the respective cross-section of the detected crop material swathe is ascertained over the ground base line in an evaluation device.

13. A method according to claim 12 **characterised in that** the configuration of the ground base line under a scanned crop material swathe is ascertained by scanning of the ground base line which is not covered with swathe at both sides of the crop material swathe and is used for more accurately determining the swathe cross-section.

14. A method according to claims 12 and 13 **characterised in that** the ascertained swathe cross-section in conjunction with the scanning frequency of the laser distance measuring device and the travel speed of the harvester serves for ascertaining the swathe volume.

15. A method according to claims 12 to 14 **characterised in that** the ascertained swathe volume in conjunction with the swathe density information serves for yield quantity measurement.

16. A method according to claims 12 to 15 **characterised in that** the spacings between the adjacent swathes is ascertained and serves to determine the harvesting area.

17. A method according to claims 12 and 16 **characterised in that** the at least one of the ascertained values is displayed and/or is used for setting working parameters of the agricultural machine.

18. A method according to claims 12 to 17 **characterised in that** the at least one ascertained value is used for setting the travel speed of the agricultural machine.

19. A method according to claims 7 to 18 **characterised in that** over the entire operating area or over partial regions thereof at least one value which is ascertained from the scanned contours is associated with terrestrial co-ordinates by a real-time locating system arranged on the agricultural machine and is stored for further use.

20. A method of contour scanning with an apparatus according to claims 1 to 6 **characterised in that** the ground contour of an agricultural useful area is scanned for producing a highly accurate three-dimensional terrain model, wherein the respectively scanned contour points of the ground are associated with terrestrial co-ordinates by way of a real-time locating system arranged on the agricultural machine having regard to at least one agricultural machine slanting position.

21. A method of contour scanning with an apparatus according to claims 1 to 6 **characterised in that** the grain surface of a cornfield is scanned and the ascertained contour serves for regulating the cutting mechanism height and/or the reel height and/or for ascertaining the cutting mechanism loading.

22. A method of contour scanning with an apparatus according to claims 1 to 6 **characterised in that** travel paths by virtue of preceding working operations in a crop material stand are scanned and scanned travel paths serve for automatic steering of an agricultural machine.

23. A method of contour scanning with an apparatus according to claims 1 to 6 **characterised in that** a threshold value for the increase in height and/or the absolute height of a scanned contour is defined in front of the agricultural machine in the travel direction and when the threshold value is exceeded a warning signal is generated for the operator of the agricultural machine.

24. A method of contour scanning with an apparatus according to claims 1 to 6 **characterised in that** the apparatus is used for detecting obstacles.

25. A method of contour scanning with an apparatus according to claims 1 to 6 **characterised in that** the distance ascertained during the pivotal time of the scanning beam is respectively corrected by the travel distance covered.

## Revendications

1. Dispositif sur des machines agricoles pour palper sans contact des contours s'étendant au-dessus du sol avec un dispositif télémétrique à laser (LM) constitué d'un dispositif émetteur/récepteur de faisceau laser qui, à partir de la mesure du temps de propagation du faisceau laser de palpage (LS) émis et réfléchi en un point du contour, détermine la distance à celui-ci, le faisceau laser de palpage (LS) étant apte à osciller pas à pas ou de façon continue dans une plage angulaire déterminée dans un plan de faisceau de palpage, et le dispositif télémétrique à laser (LM) étant monté sur la machine agricole avec une orientation telle que le plan de faisceau de palpage est incliné vers le sol selon un angle aigu (ϕ) dans le sens de la marche avant, **caractérisé par** un dispositif de traitement qui, pour chaque angle d'oscillation (α), détermine, à partir de la distance mesurée (S), de l'agencement et de l'orientation du dispositif télémétrique à laser sur la machine, la position verticale et horizontale du point du contour correspondant à l'angle d'oscillation (α), pendant la marche de la machine agricole le contour étant déterminé en permanence sur la largeur de palpage à partir des valeurs de distance recueillies, la section transversale d'un andain de produit récolté palpé au-dessus de la ligne de base du sol étant déterminée dans le dispositif de traitement à l'aide du contour palpé.

2. Dispositif selon la revendication 1, **caractérisé en ce que** le faisceau laser de palpage (LS) peut osciller par l'intermédiaire d'un miroir tournant ou d'un dispositif mobile de focalisation.

3. Dispositif selon la revendication 1, **caractérisé en ce que** le dispositif télémétrique à laser (LM) proprement dit oscille pour faire osciller le faisceau laser de palpage (LS).

4. Dispositif selon une des revendications précédentes, **caractérisé en ce que** le dispositif télémétrique à laser (L) est fixé sur la machine agricole avec une possibilité de réglage en hauteur.

5. Dispositif selon une des revendications précédentes, **caractérisé en ce que** le dispositif télémétrique à laser (LM) est fixé sur la machine agricole avec une possibilité de réglage en inclinaison, de sorte que diverses inclinaisons du faisceau laser de palpage (LS) par rapport au sol peuvent être adoptées.

6. Dispositif selon une des revendications précédentes, **caractérisé en ce que,** pour déterminer les positions obliques de la machine agricole, le dispositif de traitement du dispositif de palpage laser reçoit un signal d'un capteur d'inclinaison disposé sur la machine agricole et prend en compte la position oblique instantanée pour déterminer le contour.

7. Procédé de palpage de contour avec un dispositif selon la revendication 1, **caractérisé en ce qu'**une trace à suivre par la machine agricole est déterminée à partir du contour et/ou des sommes de contours successifs.

8. Procédé selon la revendication 1, **caractérisé en ce que** la trace déterminée sert à guider automatiquement une machine agricole suivant cette trace.

9. Procédé selon les revendications 7 à 8, **caractérisé en ce que** le centre de la trace déterminée est calculé et utilisé pour des calculs ultérieurs.

10. Procédé selon les revendications 7 à 9, **caractérisé en ce que** le signal généré est adapté à l'aide d'un décalage, lequel peut être influencé par une action manuelle et/ou par les positions obliques de la machine agricole et/ou par un moyen de détection de direction de travail, de façon qu'un déport parallèle entre la trace déterminée et le faisceau central soit possible.

11. Procédé selon les revendications 7 à 10, **caractérisé en ce que** la trace déterminée est un sillon, et la machine agricole est guidée suivant le sillon palpé.

12. Procédé selon les revendications 7 à 10, **caractérisé en ce que** la trace déterminée est un andain, et la section transversale de l'andain de produit récolté détecté au-dessus de la ligne de base du sol est à chaque fois déterminée dans un dispositif de traitement.

13. Procédé selon la revendication 12, **caractérisé en ce que** le tracé de la ligne de base du sol sous un andain de produit récolté palpé est déterminé par palpage, des deux côtés de l'andain de produit récolté, de la ligne de base du sol recouverte par l'andain et est utilisé pour déterminer la section transversale de l'andain avec une meilleure précision.

14. Procédé selon les revendications 12 et 13, **caractérisé en ce que** la section transversale déterminée de l'andain sert à déterminer le volume de l'andain en liaison avec la fréquence de palpage du dispositif télémétrique à laser et avec la vitesse de marche de la machine de récolte.

15. Procédé selon les revendications 12 à 14, **caractérisé en ce que** le volume déterminé de l'andain sert à mesurer le rendement en liaison avec l'indication de densité de l'andain.

16. Procédé selon les revendications 12 à 15, **caractérisé en ce que** les distances entre les andains voisins sont déterminées et servent à déterminer la surface récoltée.

17. Procédé selon les revendications 12 et 16, **caractérisé en ce qu'**au moins une des grandeurs déterminées est affichée et/ou utilisée pour régler des paramètres de travail de la machine agricole.

18. Procédé selon les revendications 12 à 17, **caractérisé en ce qu'**au moins une grandeur déterminée est utilisée pour régler la vitesse de marche de la machine agricole.

19. Procédé selon les revendications 7 à 18, **caractérisé en ce que,** sur toute la surface d'intervention ou sur des zones partielles de surface, au moins une des grandeurs déterminées à partir des contours palpés est associée à des coordonnées terrestres par l'intermédiaire d'un système de localisation en temps réel disposé sur la machine agricole et est mémorisée en vue d'une utilisation ultérieure.

20. Procédé de palpage de contour avec un dispositif selon les revendications 1 à 6, **caractérisé en ce que** le contour du sol d'une surface agricole utile est palpé pour établir un modèle de terrain tridimensionnel très précis, les points palpés du contour du sol étant associés, par l'intermédiaire d'un système de localisation en temps réel disposé sur la machine agricole, à des coordonnées terrestres en tenant compte d'au moins une position oblique de la machine agricole.

21. Procédé de palpage de contour avec un dispositif selon les revendications 1 à 6, **caractérisé en ce que** la surface des épis d'un champ de céréales est palpée, et le contour déterminé sert à régler la hauteur du tablier de coupe et/ou la hauteur des rabatteurs et/ou à déterminer la charge de travail du tablier de coupe.

22. Procédé de palpage de contour avec un dispositif selon les revendications 1 à 6, **caractérisé en ce que** des allées de circulation sont palpées dans une culture à récolter sur la base d'interventions antérieures, et des allées de circulation palpées servent à guider automatiquement une machine agricole.

23. Procédé de palpage de contour avec un dispositif selon les revendications 1 à 6, **caractérisé en ce qu'**une valeur seuil est définie, dans le sens de la marche devant la machine agricole, pour l'augmentation de hauteur et/ou pour la hauteur absolue d'un contour palpé et, en cas de dépassement de la valeur seuil, un signal d'avertissement est généré pour l'utilisateur de la machine agricole.

24. Procédé de palpage de contour avec un dispositif selon les revendications 1 à 6, **caractérisé en ce que** le dispositif est mis en oeuvre pour détecter des obstacles.

25. Procédé de palpage de contour avec un dispositif selon les revendications 1 à 6, **caractérisé en ce que** la distance déterminée pendant le temps d'oscillation du faisceau de palpage est à chaque fois corrigée en fonction de la portion de parcours empruntée.
